(19) Europäisches Patentamt
European Patent Office
Office européen des brevets

(11) **EP 4 231 192 A1**

(12) **EUROPEAN PATENT APPLICATION**
published in accordance with Art. 153(4) EPC

(43) Date of publication:
**23.08.2023 Bulletin 2023/34**

(21) Application number: **20958935.7**

(22) Date of filing: **26.10.2020**

(51) International Patent Classification (IPC):
***G06F 30/20*** (2020.01)    ***G06F 30/17*** (2020.01)
***G06F 119/04*** (2020.01)

(52) Cooperative Patent Classification (CPC):
**G06F 30/17; G06F 30/20;** G06F 2119/04

(86) International application number:
**PCT/CN2020/123564**

(87) International publication number:
**WO 2022/087769 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Energy Global GmbH & Co. KG**
**81739 München (DE)**

(72) Inventor: **JIANG, Zi Xian**
**Shanghai 200241 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **METHOD AND APPARATUS FOR DETERMINING LOW-CYCLE FATIGUE OF MECHANICAL COMPONENT, AND STORAGE MEDIUM**

(57)    A method and apparatus for determining the low-cycle fatigue of a mechanical component, and a storage medium. The method comprises: acquiring a plurality of cyclic operation conditions of a mechanical component in a plurality of operation cycles; for each of the plurality of operation cycles, calculating a Weibull proportional parameter on the basis of a corresponding cyclic operation condition from among the plurality of cyclic operation conditions; for each of the plurality of operation cycles, calculating the hazard rate of the mechanical component on the basis of the Weibull proportional parameter; and determining the low-cycle fatigue of the mechanical component on the basis of the hazard rate in the plurality of operation cycles, wherein the Weibull proportional parameter is used for describing the geometrical shape and the stress-strain state of the mechanical component. By means of the method and the apparatus, the problem of the determined low-cycle fatigue being inaccurate, which is caused by a fixed cyclic operation condition, can be solved, and the accuracy of risk assessment of the low-cycle fatigue can be improved.

Figure.1

## Description

### Technical field

The present disclosure relates to the field of computers, in particular to a method and apparatus for determining low-cycle fatigue of a mechanical component, and a storage medium.

### Background art

The components of a gas turbine have quite complex geometric shapes and structural forms, and operate under harsh conditions at high temperatures and high rotation speeds, so easily suffer failure and damage in a variety of ways. Low-cycle fatigue (LCF) damage is the chief factor affecting and limiting safe use of gas turbine components.

LCF evaluation is a method of analysing the mechanical integrity of gas turbine components. Traditionally, LCF evaluation of gas turbine components was based on definite crack initiation or an LCF computing model having a standard operating cycle. In fact, crack initiation is a random phenomenon, and actual operating conditions vary with the cycle.

Taking into account the random nature of crack initiation, a probabilistic LCF model and tool have already been developed. The method takes into account the uncertain nature of material attributes in the model (material attribute dispersion), as well as the effects of crack initiation dimensions and non-uniform strain forces on the components. However, such a method fails to take into account the variability or uncertain nature of operating conditions.

In other words, although a deterministic LCF evaluation method and a probabilistic LCF evaluation method have been applied in mechanical component integrity analysis in the related art, in both methods the operating cycles of mechanical components and the corresponding boundary conditions are all given by standard operating cycles and a few specific operating cycles defined by mechanical component designers. Thus, neither of the two methods takes into account variable and random operating conditions.

The question of how to extend a conventional probabilistic LCF model having fixed (standard) cyclic operating conditions to situations in which the cyclic operating conditions vary with the cycle is a problem in urgent need of a solution.

### Summary of the invention

According to one aspect of embodiments of the present disclosure, a method for determining low-cycle fatigue (LCF) of a mechanical component is provided, the method comprising: acquiring multiple cyclic operating conditions of the mechanical component in multiple operating cycles; for each of the multiple operating cycles, computing a Weibull scale parameter based on one corresponding cyclic operating condition in the multiple cyclic operating conditions; for each of the multiple operating cycles, computing a hazard rate of the mechanical component based on the Weibull scale parameter; and determining LCF of the mechanical component based on the hazard rates in the multiple operating cycles; wherein the Weibull scale parameter is used to describe the effect of a geometric shape and a stress-strain state of the mechanical component on an LCF lifespan expectation of the mechanical component; wherein the hazard rate is the probability of crack initiation occurring in a predetermined cycle when crack initiation has not occurred up till the cycle preceding the predetermined cycle, wherein the predetermined cycle is an operating cycle corresponding to the hazard rate in the multiple operating cycles.

The method described above solves the problem in the prior art that the LCF determined is imprecise because the cyclic operating conditions are fixed, so has the effect of increasing the precision of LCF risk evaluation.

In one embodiment of the present disclosure, acquiring multiple cyclic operating conditions of the mechanical component in multiple operating cycles comprises: acquiring multiple historical cyclic operating conditions of the mechanical component itself in the multiple operating cycles, as the multiple cyclic operating conditions; or acquiring respective probability distribution estimates of the multiple cyclic operating conditions of the mechanical component, as the multiple cyclic operating conditions, wherein the probability distribution estimates are obtained with reference to a statistical result of the multiple cyclic operating conditions, in the multiple operating cycles, of other components that are the same as the mechanical component but distributed at different geographical positions, or are predetermined probability distributions that satisfy the multiple cyclic operating conditions of the mechanical component.

Through the method described above, it is not only possible to perform LCF risk evaluation according to historical cyclic operating conditions which are fixed values, but also possible to perform LCF risk evaluation based on probability distribution estimates of cyclic operating conditions.

In one embodiment of the present disclosure, computing a Weibull scale parameter based on one corresponding cyclic operating condition in the multiple cyclic operating conditions comprises: computing a cyclic strain state of a surface position of the mechanical component based on the cyclic operating condition and the surface position; computing a pointwise definite LCF lifespan of the surface position based on the cyclic strain state and the surface position; and computing the Weibull scale parameter for an entire surface area of the mechanical component based on the pointwise definite LCF lifespan.

Through the above method of computing a Weibull scale parameter, it is possible to compute more precisely the effect of the geometric shape and stress-strain state of the entire mechanical component on the LCF lifespan expectation.

In one embodiment of the present disclosure, computing a Weibull scale parameter based on one corresponding cyclic operating condition in the multiple cyclic operating conditions comprises: in the case where the multiple cyclic operating conditions are respective probability distribution estimates of the multiple cyclic operating conditions, computing a Weibull scale parameter based on each case in one corresponding probability distribution in respective probability distributions of the multiple cyclic operating conditions.

Through the method described above, in the case where the cyclic operating conditions are probability distribution estimates, a Weibull scale parameter is computed precisely for each case in each probability distribution, thus making it possible to increase the precision of LCF risk evaluation.

In one embodiment of the present disclosure, computing a hazard rate of the mechanical component based on the Weibull scale parameter comprises: in the case where the multiple cyclic operating conditions are the multiple historical cyclic operating conditions, computing the hazard rate based on the Weibull scale parameter and a Weibull shape parameter that is independent of strain state; and in the case where the multiple cyclic operating conditions are respective probability distribution estimates of the multiple cyclic operating conditions, computing the hazard rate based on respective probability distributions of the multiple cyclic operating conditions and the Weibull scale parameter corresponding to each case in the probability distributions and a Weibull shape parameter that is independent of strain state.

Through the method described above, an enhanced probability LCF model is used, taking into account variability or uncertainty in operating cycles, thereby providing a more accurate quantitative method for evaluating mechanical component LCF, and it is thus possible to optimize risk evaluation and help to reduce product development or service costs.

In one embodiment of the present disclosure, determining LCF of the mechanical component comprises: in the case where the multiple cyclic operating conditions are the multiple historical cyclic operating conditions, computing a risk probability of the LCF occurring based on the hazard rates in the multiple operating cycles, to determine LCF of the mechanical component; in the case where the multiple cyclic operating conditions are respective probability distribution estimates of the multiple cyclic operating conditions, evaluating a probability distribution satisfied by an LCF lifespan of the mechanical component based on the hazard rates in the multiple operating cycles, to predict LCF of the mechanical component.

The method described above has the enhanced function of taking into account varying/random operating cycles. This can increase the cost of product design and evaluation and reduce the cost thereof, and can optimize the product service model.

In one embodiment of the present disclosure, after computing a hazard rate based on the Weibull scale parameter, the method further comprises computing a survival function based on the hazard rates of the multiple operating cycles, wherein the survival function is the probability of the mechanical component having no crack initiation in a predetermined cycle.

The method described above makes it possible to precisely determine the probability that a mechanical component will have no crack initiation in a particular cycle.

In one embodiment of the present disclosure, computing the survival function comprises: multiplying together the respective differences between the hazard rate of each operating cycle in the multiple operating cycles and 1, to obtain the survival function.

The method described above makes it possible to compute the survival function precisely, to determine the probability of there being no crack initiation.

In one embodiment of the present disclosure, after computing a hazard rate based on the Weibull scale parameter, the method further comprises: computing a probability distribution function satisfied by an LCF lifespan based on the hazard rates of the multiple operating cycles, wherein the probability distribution function is a cumulative distribution function or a probability mass function, wherein the cumulative distribution function is the probability of crack initiation occurring in the mechanical component in a stage from an initial cycle to a predetermined cycle, and the probability mass function is the extent to which the probability of crack initiation occurring in the mechanical component in a stage from an initial cycle to a predetermined cycle is higher than the probability of crack initiation occurring in a stage from an initial cycle to the cycle preceding the predetermined cycle.

The method described above makes it possible to compute the probability of crack initiation occurring in the mechanical component in a stage from an initial cycle to a predetermined cycle, and the extent to which the probability of crack initiation occurring in a stage from an initial cycle to a predetermined cycle is higher than the probability of crack initiation occurring in a stage from an initial cycle to the cycle preceding the predetermined cycle, so as to perform risk evaluation of LCF quantitatively from every angle, to help reduce product development or service costs.

According to another aspect of embodiments of the present disclosure, a storage medium is provided, having stored thereon a program which, when executed by a computer, performs any of the methods described above.

The medium described above solves the problem in the prior art that the LCF determined is imprecise because the cyclic operating conditions are fixed, so has the effect of increasing the precision of LCF risk evaluation.

According to another aspect of embodiments of the present disclosure, an apparatus for determining LCF of a mechanical component is provided, comprising: an acquisition module, configured to acquire multiple cyclic operating conditions of the mechanical component in multiple operating cycles; a parameter computing module, configured to compute a Weibull scale parameter based on one corresponding cyclic operating condition in the multiple cyclic operating conditions for each of the multiple operating cycles; a hazard rate computing module, configured to compute a hazard rate of the mechanical component based on the Weibull scale parameter for each of the multiple operating cycles; and a determining module, configured to determine LCF of the mechanical component based on the hazard rates in the multiple operating cycles.

The apparatus described above solves the problem in the prior art that the LCF determined is imprecise because the cyclic operating conditions are fixed, so has the effect of increasing the precision of LCF risk evaluation.

## Brief description of the drawings

The accompanying drawings, which form part of the present application, are intended to provide further understanding of the present disclosure; and illustrative embodiments of the present disclosure and the explanations thereof are intended to explain the present disclosure, without limiting it inappropriately. In the drawings:

Fig. 1 is a flow chart of a method for determining LCF of a mechanical component according to embodiments of the present disclosure;
Fig. 2 is a flow chart of another method for determining LCF of a mechanical component according to embodiments of the present disclosure; and
Fig. 3 is a structural schematic drawing of an apparatus for determining LCF of a mechanical component according to embodiments of the present disclosure.

## Detailed description of the invention

It must be explained that in the absence of conflict, the embodiments in the present application and features in the embodiments may be combined with each other. The present disclosure is described in detail below with reference to the drawings in conjunction with embodiments.

It must be pointed out that unless otherwise indicated, all technical and scientific terms used in the present application have the same meanings as those commonly understood by those skilled in the art.

In the present disclosure, unless indicated to the contrary, orientational terms used such as "up, down, top, bottom" are generally with respect to the directions shown in the drawings, or with respect to the component itself in the vertical, perpendicular or gravity direction; likewise, to facilitate understanding and description, "inner, outer" mean inner and outer with respect to the contour of the components themselves, but the abovementioned orientational terms are not intended to limit the present disclosure.

Firstly, a method for determining LCF without taking into account the variability of cyclic operating conditions is described.

For a given component $\Omega$ having a surface $\partial\Omega$ and a given set of cyclic operating conditions $\theta$, under a strain state $\varepsilon = \varepsilon(x;\theta)$ depending on surface position $x$ and cyclic operating conditions $\theta$, the crack count N(B,$\varepsilon$) in a set of surface positions and times $B \subset \partial\Omega \times (0, \infty]$ is a Poisson pointprocess:

$$N\big(B, \epsilon(\cdot\,; \theta)\big) \sim \mathrm{Po}\Big(\lambda\big(\mathrm{B}, \epsilon(\cdot\,; \theta)\big)\Big),$$

where the Poisson parameter $\lambda(B,\varepsilon)$ can be modeled by a crack formation density function $\rho = \rho(n,\varepsilon)$ (the average number of crack initiations per unit surface area per unit time):

$$\lambda(B, \epsilon) = \int_B \rho\big(n, \epsilon(x; \theta)\big)dAdn.$$

In the Weibull method,

$$\rho\big(n, \epsilon(x; \theta)\big) = \frac{m}{N_{i_{det}}\big(x, \epsilon(x; \theta)\big)} \left(\frac{n}{N_{i_{det}}\big(x, \epsilon(x; \theta)\big)}\right)^{m-1},$$

$m$ is a Weibull shape parameter independent of the strain state, and $N_{i_{det}}(x, \varepsilon(x;\theta))$ is the pointwise definite LCF lifespan at a given surface position $x$ having a cyclic strain state $\varepsilon(x;\theta)$, wherein the strain state $\varepsilon(x;\theta)$ has a given operating condition $\theta$. The surface area of the entire component is now considered. The Weibull scale parameter is set as:

$$\eta = \eta(\theta) = \left(\int_{\partial\Omega} N_{i_{det}}^{-m}\big(x, \epsilon(x; \theta)\big) dA\right)^{-\frac{1}{m}} \quad (1).$$

Here, $\theta$ is a constant; to make it easier to distinguish from the text below, it is written here as $\eta = \eta(\theta)$. The intensity parameter of the Poisson point process over the entire surface area within the time period $(n_1, n_2]$ then changes to:

$$\lambda\big(\partial\Omega \times (n_1, n_2], \epsilon(\cdot; \theta)\big) = \frac{n_2^m - n_1^m}{\eta^m(\theta)}. \qquad (2)$$

Because crack initiation is modeled by a Poisson point process, a conditional survival function can be obtained, as the probability that there will be no crack initiation on the component surface $\partial\Omega$ up till time n:

$$S_{N_i}(n) = P(N_i > n) = P(N(\partial\Omega \times (0, n], \epsilon) = 0) = \exp\left(-\lambda\big(\partial\Omega \times (0, n], \epsilon(\cdot; \theta)\big)\right) = \exp\left(-\left(\frac{n}{\eta(\theta)}\right)^m\right).$$

A cumulative distribution function (CDF) of random crack initiation time (i.e. LCF lifespan) is then obtained according to a survival probability computed based on the condition survival function:

$$F_{N_i}(n) = P(N_i \leq n) = 1 - S_{N_i}(n) = 1 - \exp\left(-\left(\frac{n}{\eta(\theta)}\right)^m\right).$$

Next, a probability distribution function (PDF) is obtained according to the cumulative distribution function (CDF), wherein the probability distribution function (PDF) is the derivative of the cumulative distribution function (CDF):

$$f_{N_i}(n) = \frac{d}{dn} F_{N_i}(n) = \frac{m}{\eta(\theta)} \left(\frac{n}{\eta(\theta)}\right)^{m-1} \exp\left(-\left(\frac{n}{\eta(\theta)}\right)^m\right).$$

Finally, based on the condition survival function and the probability distribution function (PDF) obtained above, a hazard rate function is obtained, wherein the hazard rate function is defined as the instantaneous probability of crack initiation occurring in the case where no crack initiation has yet occurred up till now (the hazard rate function will be particularly useful hereinbelow):

$$h_{N_i}(n) = \lim_{\Delta n \to 0} \frac{P(N_i \in (n, n+\Delta n] \mid N_i > n)}{\Delta n} = \frac{f_{N_i}(n)}{S_{N_i}(n)} = \frac{m}{\eta(\theta)} \left(\frac{n}{\eta(\theta)}\right)^{m-1}$$

The description below focuses on an enhanced probability LCF model that takes into account material uncertainty and variable cyclic operating conditions.

In embodiments of the present disclosure, a novel probabilistic LCF evaluation method that takes into account the random nature of crack initiation and the variability or uncertainty of operating conditions is proposed. In the probabilistic LCF evaluation method, an enhanced probabilistic LCF model is used, and this model takes into account variable cyclic operating conditions.

Firstly, a situation is described in which the cyclic operating conditions are historical cyclic operating conditions. To distinguish this from a situation described below in which the cyclic operating conditions are a probability distribution, in this situation a crisis rate, survival function, probability distribution function, cumulative distribution function and probability mass function are also called a conditional crisis rate, a conditional survival function, a conditional probability distribution function, a conditional cumulative distribution function and a conditional probability mass function.

In a modeling method for a probabilistic LCF model that does not take into account the variability of cyclic operating conditions, a random LCF lifespan can take any value in the positive real number set $N_i \in \mathbb{R}_+$ . Hereinbelow, a situation is considered in which it is only possible to observe whether crack initiation has occurred when each cycle ends. This means that, rather than a random variable $N_i$, an upper limit integer (ceiling integer) thereof must be described:

$$\lceil N_i \rceil = \inf_{n \in \mathbb{N}}\{n: n \geq N_i\}$$

Put simply, hereinbelow, a variable $n, k \in \mathbb{N}$ is an integer number of cycles, and $t \in \mathbb{R}_+$ is real-valued (LCF lifespan) time.

When the cyclic operating conditions and implicit strain state are constant throughout the cycle, the Poisson point process model of crack initiation in time and space naturally indicates the following basic assumption: random crack counts between multiple non-intersecting sets of times and surface positions are performed independently, i.e. are unrelated to each other. The reason why such an assumption can be made is that: LCF cracks are very small and cannot change the macroscopic strain state of the component, so a crack initiated at a particular time and surface position has no effect on crack initiation at other times and positions. This assumption can be naturally extended to situations in which the cyclic operating conditions and the strain states produced change in different cycles. In fact, it is only assumed that the macroscopic strain state of the component changes only because the cyclic operating conditions change, and not because of any crack initiation; moreover, crack initiation is still only affected by time and the local strain state, but not affected by crack initiation at other times and surface positions. Hereinbelow, this assumption is referred to as the assumption of inter-cyclic independence of random crack number.

In a modeling method for a probabilistic LCF model that does not take into account the variability of cyclic operating conditions, the cyclic operating conditions θ are constant in all cycles. However, from now on, the θ value of each cycle will be different. Assume that a series of cyclic operating conditions of a gas turbine component are $\{\theta_k\}_{k \in N}$ . It can easily be observed that in each cycle, the number of cracks still conforms to a Poisson random process. Given a number of cycles k and a set of times and positions $B \subset \partial\Omega \times (k - 1,k]$, the number of cracks conforms to a Poisson distribution:

$$N\big(B, \epsilon(\cdot; \theta_k)\big) \sim \mathrm{Po}\left(\lambda\big(B, \epsilon(\cdot; \theta_k)\big)\right).$$

Let $\mathbb{N}_n = \{k \in \mathbb{N}: k \leq n\}$ . For a given number of cycles n and a given series of operating conditions $\{\theta_k\}_{k \in \mathbb{N}}$ used for evaluation, the condition survival function only depends on the operating cycles of the previous n cycles, i.e.:

$$S_{\lceil N_i \rceil}(n|\{\theta_k\}_{k \in \mathbb{N}}) = P(\lceil N_i \rceil > n|\{\theta_k\}_{k \in \mathbb{N}}) = P\big(\lceil N_i \rceil > n\big|\{\theta_k\}_{k \in \mathbb{N}_n}\big) = S_{\lceil N_i \rceil}\big(n|\{\theta_k\}_{k \in \mathbb{N}_n}\big).$$

Through the abovementioned assumption of inter-cyclic independence of random crack count, the condition survival function having a given series of cyclic operating conditions may be written as the product of probabilities of no crack initiation within each cycle time period:

$$S_{[N_i]}\left(n|\{\theta_k\}_{k\in\mathbb{N}_n}\right) = P\left(N\left(\partial\Omega \times (0,n], \epsilon(\cdot; \{\theta_k\}_{k\in\{1,\dots,n\}})\right)\right) = 0\right)$$

$$= P\left(N\left(\partial\Omega \times (k-1,k], \epsilon(\cdot;\theta_k)\right) = 0, k = 1, \dots, n\right)$$

$$= \prod_{k=1}^{n} P\left(N\left(\partial\Omega \times (k-1,k], \epsilon(\cdot;\theta_k)\right) = 0\right)$$

$$= \prod_{k=1}^{n} exp\left(-\lambda\left(\partial\Omega \times (k-1,k], \epsilon(\cdot;\theta_k)\right)\right)$$

$$= exp\left(-\sum_{k=1}^{n} \frac{k^m-(k-1)^m}{\eta^m(\theta_k)}\right). \tag{3}$$

where the last equation uses the result in equation (2). Thus, the conditional cumulative distribution function (CDF) of the number of cycles $[N_i]$ of the discrete random LCF lifespan is written as:

$$F_{[N_i]}\left(n|\{\theta_k\}_{k\in\mathbb{N}_n}\right) = 1 - S_{[N_i]}\left(n|\{\theta_k\}_{k\in\mathbb{N}_n}\right) = 1 - exp\left(-\sum_{k=1}^{n} \frac{k^m-(k-1)^m}{\eta^n(\theta_k)}\right). \tag{4}$$

$f_{[N_i]}\left(n|\{\theta_k\}_{k\in\mathbb{N}_n}\right)$ is used to represent the conditional probability mass function (PMF) for $[N_i]$, and then obviously, $f_{[N_i]}(0|\{\theta_k\}_{k\in\mathbb{N}}) = 0$, and for $n \geq 1$, the conditional probability mass function (PMF) is:

$$f_{[N_i]}\left(n|\{\theta_k\}_{k\in\mathbb{N}_n}\right) = F_{[N_i]}\left(n|\{\theta_k\}_{k\in\mathbb{N}_n}\right) - F_{[N_i]}\left(n-1|\{\theta_k\}_{k\in\mathbb{N}_{n-1}}\right)$$

$$= \left(1 - exp\left(-\frac{n^m-(n-1)^m}{\eta^m(\theta_n)}\right)\right) exp\left(-\sum_{k=1}^{n-1} \frac{k^m-(k-1)^m}{\eta^m(\theta_k)}\right). \tag{5}$$

The conditional hazard rate function will be helpful in providing a better understanding of the model. In the discrete case, the conditional hazard rate function of a given series of cyclic operating conditions is defined as the probability of crack initiation in a particular cycle in the case where it is known that there has been no crack initiation up till the previous cycle. This is expressed by the following mathematical formula:

$$h_{[N_i]}\left(n|\{\theta_k\}_{k\in\mathbb{N}_n}\right) = P\left([N_i] = n|[N_i] > n-1, \{\theta_k\}_{k\in\mathbb{N}_n}\right)$$

$$= \frac{F_{[N_i]}(n|\{\theta_k\}_{k\in\mathbb{N}_n}) - F_{[N_i]}(n-1|\{\theta_k\}_{k\in\mathbb{N}_{n-1}})}{S_{[N_i]}(n-1|\{\theta_k\}_{k\in\mathbb{N}_{n-1}})}$$

$$= 1 - exp\left(-\frac{n^m-(n-1)^m}{\eta^m(\theta_n)}\right). \tag{6}$$

Equation (6) shows that the conditional hazard rate function at a specific number of cycles only depends on the cyclic operating conditions of the cycle, i.e. $h_{[N_i]}\left(n|\{\theta_k\}_{k\in\mathbb{N}_n}\right) = h_{[N_i]}(n|\theta_n)$. With the aid of this attribute, it is possible to rewrite the conditional survival function, conditional cumulative distribution function (CDF) and conditional probability mass function (PMF) in formulae (3) to (5) according to the conditional hazard rate function:

$$S_{[N_i]}\left(n|\{\theta_k\}_{k\in\mathbb{N}_n}\right) = \prod_{k=1}^{n}\left(1 - h_{[N_i]}(k|\theta_k)\right), \tag{7}$$

$$F_{[N_i]}\left(n|\{\theta_k\}_{k\in\mathbb{N}_n}\right) = 1 - \prod_{k=1}^{n}\left(1 - h_{[N_i]}(k|\theta_k)\right), \tag{8}$$

$$f_{[N_i]}\big(n\big|\{\theta_k\}_{k\in\mathbb{N}_n}\big) = h_{[N_i]}(n|\theta_n)\prod_{k=1}^{n-1}\Big(1 - h_{[N_i]}(k|\theta_k)\Big). \qquad (9)$$

Next, a situation will be described in which the cyclic operating conditions are a probability distribution estimate.

Up till now, the matter concerned has always been under a given series of cyclic operating conditions. If a precise series of cyclic operating conditions is not known, but there is a probability distribution estimate of cyclic operating conditions, the cyclic operating conditions may be modeled as a random variable. Generally, it can be assumed that the cyclic operating conditions of the nth cycle can be represented by a continuous random variable $\Theta_n$ in space $X_{\Theta_n}$ that conforms to a distribution function $f_{\Theta_n}(\cdot)$. The case in which there is a discrete random variable is similar, and can be easily obtained from the continuous case. Note that the distribution function $f_{\Theta_n}(\cdot), n \in \mathbb{N}$ is different for different cycles. Then, in the definition according to marginal probability, it is possible to obtain the hazard rate function, survival function, CDF and PMF of the random LCF lifespan cycle number below from equations (6) to (9) :

$$h_{[N_i]}(n) = \int_{X_{\Theta_n}} h_{[N_i]}(n|\theta_n)f_{\Theta_n}(\theta_n)d\theta_n, \qquad (11)$$

$$S_{[N_i]}(n) = \prod_{k=1}^{n}(1 - h_{[N_i]}(k)), \qquad (12)$$

$$F_{[N_i]}(n) = 1 - \prod_{k=1}^{n}(1 - h_{[N_i]}(k)), \qquad (13)$$

$$f_{[N_i]}(n) = h_{[N_i]}(n)\prod_{k=1}^{n-1}(1 - h_{[N_i]}(k)). \qquad (14)$$

In a specific case in which all of the random variables $\{\Theta_n\}_{n\in\mathbb{N}}$ satisfy the same distribution and at this time they can all be represented by the representative variable $\theta$ (conforming to the same distribution $f_\theta(\cdot)$ in the same space $X_\theta$), a similar computation result can be obtained, and it is only necessary to make a very small alteration to equation (11) (i.e. replacing $_{\Theta_n}$ with $\Theta$, and replacing $\theta_n$ with $\theta$.

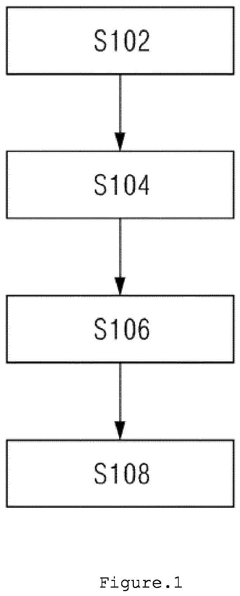

A computation algorithm for LCF lifespan having a varying and/or random operating cycle is described below. Fig. 1 is a flow chart of a method for determining LCF of a mechanical component according to embodiments of the present disclosure. In an enhanced probabilistic LCF model, an algorithm for determining LCF is generated based on equations (1) and (6) - (9); it is possible to estimate a probability distribution of the LCF lifespan cycle number under a given series of cyclic operating conditions, i.e. determine the probability of LCF of the mechanical component. The procedure of the determining method is as shown in Fig. 1, comprising the following steps:

S102, acquiring a series of cyclic operating conditions $\{\theta_k\}_{k\in\mathbb{N}}$ .

5104, computing a Weibull scale parameter of each operating cycle.

A Weibull shape parameter m is fixed, and the Weibull scale parameter $\eta(\theta_k)$ of each cycle is computed using equation (1) by means of an existing ProbLCF tool. For each of the multiple operating cycles, a Weibull distribution scale parameter is computed based on each possible case, in a corresponding probability distribution, of one corresponding cyclic operating condition in the multiple cyclic operating conditions.

S106, computing a hazard rate function of each operating cycle.

Equation (6) is used to compute a conditional hazard rate function of each cycle.

S108, computing a conditional survival function, a conditional CDF and a conditional PMF.

The conditional survival function, conditional CDF and conditional PMF are obtained through equations (7) - (9).

The method is especially useful when estimating the LCF crack risk or remaining LCF lifespan of gas turbine components in the stage of product use. Because the operating history is known, it is possible to accurately compute the conditional survival function of the mechanical component and the conditional CDF of the LCF lifespan. These functions can provide a quantitative LCF crack initiation risk when evaluation is performed, and help in the formulation of service decisions. For example, if the conditional CDF value computed when evaluation is performed is close to 1, then the risk of LCF crack initiation is relatively high, in which case overhaul or replacement of the component might be recommended according to further engineering judgment and decision-making. Conversely, if the computed conditional CDF value is much lower than 1, then the mechanical component can still be safely used.

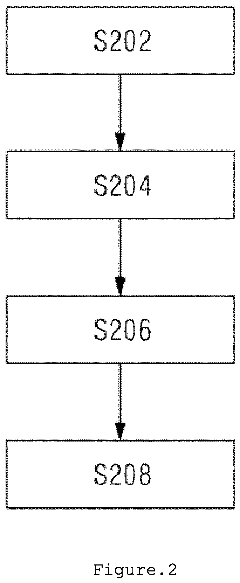

If a series of cyclic operating conditions is not known, but there is a probability distribution estimate of a random series of cyclic operating conditions, then regardless of whether the cyclic operating conditions are the same, the random LCF lifespan can be computed using equations (1), (6) and (11) - (14) in the enhanced probability LCF model. Fig. 2 is a flow chart of another method for determining LCF of a mechanical component according to embodiments of the present disclosure. As shown in Fig. 2, the method comprises:

S202, sampling a cyclic operating condition.

For each cycle $n$, the cyclic operating condition $\theta_n$ is sampled in space $X_{\Theta_n}$ after $f_{\Theta_n}$.

S204, computing a Weibull scale parameter.

A Weibull shape parameter m is fixed, and a Weibull scale parameter $\eta(\theta_n)$ is computed for each cycle and each sampled cyclic operating condition using equation (1) by means of an existing ProbLCF tool.

S206, computing a hazard rate.

For each cycle and each sampled cyclic operating condition, (6) is used to compute a conditional hazard rate function.

S208, computing a hazard rate function, survival function, CDF and PMF.

A hazard rate function, survival function, CDF and PMF are obtained by means of equations (11) to (14).

The method is especially useful in the stage of designing the mechanical component. A probability distribution estimate of a future operating cycle can be obtained by performing statistical analysis of existing fleet data or by engineering judgment.

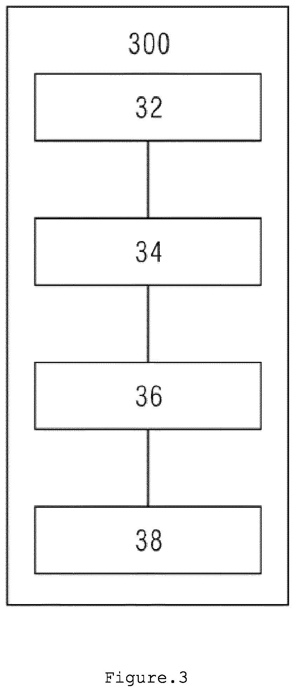

The present disclosure further provides an apparatus for determining LCF of a mechanical component. Fig. 3 is a structural schematic drawing of an apparatus for determining LCF of a mechanical component according to embodiments of the present disclosure. The apparatus 300 for determining LCF of a mechanical component comprises an acquisition module 32, a parameter computing module 34, a hazard rate computing module 36 and a determining module 38.

The acquisition module 32 is configured to acquire multiple cyclic operating conditions of the mechanical component in multiple operating cycles; the parameter computing module 34 is configured to compute a Weibull scale parameter based on one corresponding cyclic operating condition in the multiple cyclic operating conditions for each of the multiple operating cycles; the hazard rate computing module 36 is configured to compute a conditional hazard rate based on the Weibull scale parameter for each of the multiple operating cycles; and the determining module 38 is configured to determine whether the mechanical component is at LCF based on the conditional hazard rates in the multiple operating cycles.

In the present disclosure, an enhanced probability LCF model is used, thereby taking into account variability or uncertainty in operating cycles. Through this embodiment, a more accurate quantitative method is provided for evaluating mechanical component LCF, and it is possible to optimize risk evaluation and help to reduce product development or service costs.

The present disclosure improves the product design and the service method from a technical perspective, and has the enhanced function of taking into account varying/random operating cycles. This can increase the cost of product design and evaluation and reduce the cost thereof, and can optimize the product service model.

Obviously, the embodiments described above are merely some, not all, of the embodiments of the present disclosure. All other embodiments obtained by those skilled in the art based on the embodiments in the present disclosure without inventive effort shall fall within the scope of protection of the present disclosure.

It should be noted that the terms used herein are intended merely to describe specific embodiments, not to limit exemplary embodiments according to the present application. As used herein, unless clearly indicated otherwise in the context, the singular form is also intended to include the plural form; furthermore, it should also be understood that when the term "includes" and/or "comprises" is used herein, it indicates the existence of a feature, step, operation, device, component and/or a combination thereof.

It must be explained that the terms "first", "second", etc. in the description and claims of the present application and the abovementioned drawings are used to distinguish between similar objects, and not necessarily used to describe a specific order or sequence. It should be understood that data used in this way can be swapped in appropriate circumstances, so that the embodiments of the present application described herein can be implemented in a different order from those illustrated or described herein.

The above are merely preferred embodiments of the present disclosure, which are not intended to limit it. To those skilled in the art, the present disclosure could have various alterations and changes. Any amendments, equivalent substitutions or improvements, etc. made within the spirit and principles of the present disclosure should be included in the scope of protection thereof.

**Claims**

1. A method for determining low-cycle fatigue (LCF) of a mechanical component, **characterized by** comprising:

   acquiring multiple cyclic operating conditions of the mechanical component in multiple operating cycles;
   for each of the multiple operating cycles, computing a Weibull scale parameter based on one corresponding cyclic operating condition in the multiple cyclic operating conditions;
   for each of the multiple operating cycles, computing a hazard rate of the mechanical component based on the Weibull scale parameter; and
   determining LCF of the mechanical component based on the hazard rates in the multiple operating cycles;
   wherein the Weibull scale parameter is used to describe the effect of a geometric shape and a stress-strain state of the mechanical component on an LCF lifespan expectation of the mechanical component;
   wherein the hazard rate is the probability of crack initiation occurring in a predetermined cycle when crack initiation has not occurred up till the cycle preceding the predetermined cycle, wherein the predetermined cycle is an operating cycle corresponding to the hazard rate in the multiple operating cycles.

2. The method as claimed in claim 1, **characterized in that** acquiring multiple cyclic operating conditions of the mechanical component in multiple operating cycles comprises:

   acquiring multiple historical cyclic operating conditions of the mechanical component itself in the multiple operating cycles, as the multiple cyclic operating conditions; or
   acquiring respective probability distribution estimates of the multiple cyclic operating conditions of the mechanical component, as the multiple cyclic operating conditions, wherein the probability distribution estimates are obtained with reference to a statistical result of the multiple cyclic operating conditions, in the multiple operating cycles, of other components that are the same as the mechanical component but distributed at different geographical positions, or are predetermined probability distributions that satisfy the multiple cyclic operating conditions of the mechanical component.

3. The method as claimed in claim 2, **characterized in that** computing a Weibull scale parameter based on one corresponding cyclic operating condition in the multiple cyclic operating conditions comprises:

   computing a cyclic strain state of a surface position of the mechanical component based on the cyclic operating condition and the surface position;
   computing a pointwise definite LCF lifespan of the surface position based on the cyclic strain state and the surface position; and
   computing the Weibull scale parameter for an entire surface area of the mechanical component based on the pointwise definite LCF lifespan.

4. The method as claimed in claim 2, **characterized in that** computing a Weibull scale parameter based on one corresponding cyclic operating condition in the multiple cyclic operating conditions comprises: in the case where the multiple cyclic operating conditions are respective probability distribution estimates of the multiple cyclic operating conditions, computing a Weibull scale parameter based on each case in one corresponding probability distribution in respective probability distributions of the multiple cyclic operating conditions.

5. The method as claimed in claim 2, **characterized in that** computing a hazard rate of the mechanical component based on the Weibull scale parameter comprises:

   in the case where the multiple cyclic operating conditions are the multiple historical cyclic operating conditions, computing the hazard rate based on the Weibull scale parameter and a Weibull shape parameter that is independent of strain state; and
   in the case where the multiple cyclic operating conditions are respective probability distribution estimates of the multiple cyclic operating conditions, computing the hazard rate based on respective probability distributions of the multiple cyclic operating conditions and the Weibull scale parameter corresponding to each case in the probability distributions and a Weibull shape parameter that is independent of strain state.

6. The method as claimed in claim 2, **characterized in that** determining LCF of the mechanical component comprises:

   in the case where the multiple cyclic operating conditions are the multiple historical cyclic operating conditions, computing a risk probability of the LCF occurring based on the hazard rates in the multiple operating cycles, to determine LCF of the mechanical component;

in the case where the multiple cyclic operating conditions are respective probability distribution estimates of the multiple cyclic operating conditions, evaluating a probability distribution satisfied by an LCF lifespan of the mechanical component based on the hazard rates in the multiple operating cycles, to predict LCF of the mechanical component.

7. The method as claimed in claim 1, **characterized in that** after computing a hazard rate based on the Weibull scale parameter, the method further comprises computing a survival function based on the hazard rates of the multiple operating cycles, wherein the survival function is the probability of the mechanical component having no crack initiation in a predetermined cycle.

8. The method as claimed in claim 7, **characterized in that** computing the survival function comprises: multiplying together the respective differences between the hazard rate of each operating cycle in the multiple operating cycles and 1, to obtain the survival function.

9. The method as claimed in claim 1, **characterized in that** after computing a hazard rate based on the Weibull scale parameter, the method further comprises: computing a probability distribution function satisfied by an LCF lifespan based on the hazard rates of the multiple operating cycles, wherein the probability distribution function is a cumulative distribution function or a probability mass function, wherein the cumulative distribution function is the probability of crack initiation occurring in the mechanical component in a stage from an initial cycle to a predetermined cycle, and the probability mass function is the extent to which the probability of crack initiation occurring in the mechanical component in a stage from an initial cycle to a predetermined cycle is higher than the probability of crack initiation occurring in a stage from an initial cycle to the cycle preceding the predetermined cycle.

10. A storage medium, having a program stored thereon, **characterized in that** the program, when executed by a computer, performs the method as claimed in any one of claims 1 - 9.

11. An apparatus for determining LCF of a mechanical component, **characterized by** comprising:

an acquisition module, configured to acquire multiple cyclic operating conditions of the mechanical component in multiple operating cycles;

a parameter computing module, configured to compute a Weibull scale parameter based on one corresponding cyclic operating condition in the multiple cyclic operating conditions for each of the multiple operating cycles;

a hazard rate computing module, configured to compute a hazard rate of the mechanical component based on the Weibull scale parameter for each of the multiple operating cycles; and

a determining module, configured to determine LCF of the mechanical component based on the hazard rates in the multiple operating cycles.

```
┌─────────────────────┐
│                     │
│        S102         │
│                     │
└─────────────────────┘
           │
           ▼
┌─────────────────────┐
│                     │
│        S104         │
│                     │
└─────────────────────┘
           │
           ▼
┌─────────────────────┐
│                     │
│        S106         │
│                     │
└─────────────────────┘
           │
           ▼
┌─────────────────────┐
│                     │
│        S108         │
│                     │
└─────────────────────┘
```

Figure.1

```
┌─────────────────────────┐
│                         │
│          S202           │
│                         │
└─────────────────────────┘
             │
             ▼
┌─────────────────────────┐
│                         │
│          S204           │
│                         │
└─────────────────────────┘
             │
             ▼
┌─────────────────────────┐
│                         │
│          S206           │
│                         │
└─────────────────────────┘
             │
             ▼
┌─────────────────────────┐
│                         │
│          S208           │
│                         │
└─────────────────────────┘
```

Figure.2

Figure.3

## INTERNATIONAL SEARCH REPORT

International application No.

**PCT/CN2020/123564**

| A. | CLASSIFICATION OF SUBJECT MATTER |
|---|---|

G06F 30/20(2020.01)i;  G06F 30/17(2020.01)i;  G06F 119/04(2020.01)i

According to International Patent Classification (IPC) or to both national classification and IPC

| B. | FIELDS SEARCHED |
|---|---|

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS, CNTXT, CNKI, SIPOABS, DWPI; 机械, 部件, 构件, 低周疲劳, 老化, 复数, 多个, 周期, 威布尔, 寿命, 预期, 预定, 裂纹, 概率, 几何, 应力; machine, mechanism, parts, component?, assembly, member, fag, fatigue, prostration, tire, tiredness, weariness, aging, complex, plural, pluralism, plurality, multiple, Cyc, cycle, period?, weibull, life, longevity, anticipate, anticipation, contemplate, contemplation, expect, prolepsis, expectation, presuppose, prolepses, prolepsis, destine, prearrange, preconcert, schedule, crack, crackle, flaw, probability, geometry, stress;

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 104823191 A (SIEMENS AG.) 05 August 2015 (2015-08-05)<br>see description, paragraph 0080 to paragraph 0160, figures 1-20 | 1-11 |
| A | CN 107784178 A (CHINA ACADEMY OF ORDNANCE SCIENCE) 09 March 2018 (2018-03-09)<br>see entire document | 1-11 |
| A | CN 110879912 A (SIMENS AG.) 13 March 2020 (2020-03-13)<br>see entire document | 1-11 |
| A | CN 106153311 A (AECC COMMERCIAL AIRCRAFT ENGINE CO., LTD.) 23 November 2016 (2016-11-23)<br>see entire document | 1-11 |
| A | CN 109598079 A (CHINANORTH ENGINE RESEARCH INSTITUTE (TIANJIN)) 09 April 2019 (2019-04-09)<br>see entire document | 1-11 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 July 2021** | **29 July 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/123564** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 103605329 A (SHANGHAI POWER EQUIPMENT RESEARCH INSTITUTE) 26 February 2014 (2014-02-26)<br>  see entire document | 1-11 |
| A | CN 108256192 A (INSTITUTE OF METAL RESEARCH, CHINESE ACADEMY OF SCIENCES) 06 July 2018 (2018-07-06)<br>  see entire document | 1-11 |
| A | US 2007295098 A1 (BALESTRA CHESTER L et al.) 27 December 2007 (2007-12-27)<br>  see entire document | 1-11 |
| A | US 4764882 A (KRAFTWERK UNION AG et al.) 16 August 1988 (1988-08-16)<br>  see entire document | 1-11 |
| A | CN 108170905 A (NANCHANG HANGKONG UNIVERSITY) 15 June 2018 (2018-06-15)<br>  see entire document | 1-11 |
| A | CN 106596301 A (CHINA HELICOPTER RESEARCH AND DEVELOPMENT INSTITUTE) 26 April 2017 (2017-04-26)<br>  see entire document | 1-11 |

Form PCT/ISA/210 (second sheet) (January 2015)

Form PCT/ISA/210 (patent family annex) (January 2015)

**INTERNATIONAL SEARCH REPORT**
Information on patent family members

International application No.

**PCT/CN2020/123564**

| Patent document cited in search report | | | Publication date (day/month/year) | Patent family member(s) | | | Publication date (day/month/year) |
|---|---|---|---|---|---|---|---|
| CN | 104823191 | A | 05 August 2015 | US | 2014107948 | A1 | 17 April 2014 |
| | | | | KR | 102069032 | B1 | 22 January 2020 |
| | | | | WO | 2014060160 | A1 | 24 April 2014 |
| | | | | EP | 2909760 | B1 | 04 July 2018 |
| | | | | JP | 2015532430 | A | 09 November 2015 |
| | | | | KR | 20150074034 | A | 01 July 2015 |
| | | | | CN | 104823191 | B | 22 May 2018 |
| | | | | EP | 2909760 | A1 | 26 August 2015 |
| | | | | ES | 2687228 | T3 | 24 October 2018 |
| | | | | US | 9280620 | B2 | 08 March 2016 |
| CN | 107784178 | A | 09 March 2018 | None | | | |
| CN | 110879912 | A | 13 March 2020 | None | | | |
| CN | 106153311 | A | 23 November 2016 | CN | 106153311 | B | 14 May 2019 |
| CN | 109598079 | A | 09 April 2019 | None | | | |
| CN | 103605329 | A | 26 February 2014 | CN | 103605329 | B | 13 January 2016 |
| CN | 108256192 | A | 06 July 2018 | None | | | |
| US | 2007295098 | A1 | 27 December 2007 | EP | 2035806 | A2 | 18 March 2009 |
| | | | | US | 7454297 | B2 | 18 November 2008 |
| | | | | WO | 2007149150 | A2 | 27 December 2007 |
| | | | | WO | 2007149150 | A3 | 03 April 2008 |
| | | | | EP | 2035806 | B1 | 01 August 2012 |
| US | 4764882 | A | 16 August 1988 | EP | 0122578 | A3 | 01 April 1987 |
| | | | | BR | 8401842 | A | 27 November 1984 |
| | | | | EP | 0122578 | A2 | 24 October 1984 |
| | | | | DE | 3314181 | A1 | 25 October 1984 |
| | | | | JP | S59206751 | A | 22 November 1984 |
| | | | | EP | 0122578 | B1 | 19 July 1989 |
| | | | | ES | 531767 | D0 | 16 January 1987 |
| | | | | DE | 3479064 | D1 | 24 August 1989 |
| | | | | ES | 531767 | A0 | 16 January 1987 |
| | | | | ES | 8703028 | A1 | 16 January 1987 |
| CN | 108170905 | A | 15 June 2018 | CN | 108170905 | B | 04 February 2020 |
| CN | 106596301 | A | 26 April 2017 | None | | | |